# EUROPEAN PATENT APPLICATION

(11) **EP 3 127 872 A1**
(43) Date of publication of application: **08.02.2017**
(21) Application number: 15398011.5
(22) Date of filing: 05.08.2015
(51) Int. Cl.: C02F 1/66, C02F 1/52

(54) **METHOD FOR INCREASED FILTRATION EFFICIENCY**

(71) Applicant: Sociedade Portuguesa do Ar Líquido, 1495-131 Algés (PT); Air Liquide España, S.A., Madrid (ES); L'AIR LIQUIDE, SOCIETE ANONYME POUR L'ETUDE ET L'EXPLOITATION DES PROCEDES GEORGES CLAUDE, 75007 Paris (FR)
(72) Inventor: Povill, Antonio Alsina, 08349 Cabrera de Mar Barcelona (ES); Estima de Oliveira Araújo, Arnaldo Manuel, 1150-200 Lisboa (PT)
(74) Representative: Ferreira, Maria Silvina

(57) **Abstract**

The present application discloses a method for increased filtration efficiency.

The method now disclosed describes the use of a static or dynamic mixer to react pure CO₂ or mixtures of CO₂, either in gas or liquid or solid form, with the incoming fluid to be filtered.

This method for increased filtration efficiency can be applied for example in water treatment plants and food industry and any industrial activity that requires increased filtration efficiency.

## Description

### Technical domain

The present application discloses a method for increased filtration efficiency, which can be applied as example in water treatment plants and food industry and any industrial activity that requires increased filtration efficiency.

### Prior art

The word "drainage" is currently used related to the flow of interstitial aqueous filtrate that can be taken from the mass of sludge, either by gravity or by mechanical means depending on the technology employed. To remove the filtrate, equipment such as belt filters, filter presses, centrifugal decanters, among others, can be used. The aim is to extract the most of the water containing filtrate from the sludge. This will allow to reduce the quantity of excess sludge transported and thus will impact in the sludge transport costs. The term sludge is commonly employed to describe a process product of biological, chemical or physical treatment of water and wastewater.

In an example, the release of the residual water can be obtained by gravity drainage of sludge on drying beds or by mechanical means. Drying beds are filled with sand-gravel on which the sludge is spread and left to drain/evaporate for a certain time. By simple drainage a max of 20% solid-in water-sludge can be achieved.

Mechanical dewatering can be achieved by:
- Filter press: separation process used to separate liquids and solids that uses the principle of pressure drive, provided by a sludge pump. The sludge is fed into the machine, after which a moving plate clamps a series of filter plates together;
- Centrifugal decanter: solids particles are accelerated by fast rotation thanks to the centrifugal forces to the periphery of a cylindrical or conical separator, from where it is removed by a screw conveyer or blades. This is a very compact system;
- Belt press: dewatering technology that applies mechanical pressure to a chemically conditioned sludge, which is sandwiched between two tensioned belts. Typically, a belt filter press receives a slurry ranging from 1-4% feed solids and produces a final product of 12-35% cake solids;
- Vacuum filter: works on the principle that inside a drum rotating in the sludge is created a vacuum, and consequently sludge is deposited on the drum surface and water is sucked inside. The solids content in the sludge cake varies with the type of sludge, typically from 16-20% (for raw activated sludge) to 32-40% (for well digested primary sludge).

The document DE3144314A1 discloses a process for the treatment of sewage sludge where the said sewage sludge is contacted with CO₂-containing gases at elevated pressure and then abruptly let down. However, this document does not disclose the use of a static or dynamic mixer to introduce pure CO₂ or mixtures of CO₂ before the filtration.

The document GB1088400A discloses a method of dewatering sludge where the sewage sludge is dewatered in a decanting centrifuge and lime is added to the centrifugate if not already present. Then, the mixture is treated with CO₂ until pH is below 10. The resulting liquid is thickened and the solids fed back into the cycle before or after the centrifuge. However, this document does not disclose the use of a static or dynamic mixer to introduce pure CO₂ or mixtures of CO₂ before the filtration.

### Summary

The present application discloses a method for increased filtration efficiency comprising the following steps:
- CO₂ or mixtures of CO₂ are added to the fluid to be filtered, from a CO₂ regulation station;
- the flow of CO₂ or mixtures of CO₂ is mixed with the fluid to be filtered in a mixer;
- the pH of the mixture is measured after passing the mixer;
- the mixture obtained proceeds to filtration.

In an embodiment, the mixer used in the method for increased filtration efficiency is static.

In another embodiment, the mixer used in the method for increased filtration efficiency is dynamic.

In even another embodiment, the CO₂ or mixtures of CO₂ used in the method for increased filtration efficiency are in solid form, in liquid form, gaseous form or mix gas with liquid.

In an embodiment, the method for increased filtration efficiency comprises the use of a CO₂ dosing station between the CO2 regulation station and the mixer.

The present application also discloses the use of the method for increased filtration efficiency in water treatment plants and food industry.

### General description

The present application describes a method for increased filtration efficiency, which can be applied as example in water treatment plants and food industry and any industrial activity that requires increased filtration efficiency.

In this method, pure CO₂ or mixtures of CO₂ can be used before the dewatering step to increase drainage of interstitial water from the sludge. The dewatering steps with the use of CO₂ show a very important drainage effect which increases the dewatering ability of the equipment for mechanical dewatering. This CO₂ can come, for instance, from a tank or from the flue gases of a boiler.

The pure CO₂ or mixtures of CO₂, either in gas or liquid or solid form, can be added using a static mixer, a dynamic mixer or any other device to make react the CO₂ with the fluid to be filtered - in this way with the same dose of flocculant, preferably a polymer flocculant, and even more preferably a modified polyacrylamide, the fluid will drain more efficiently in the mechanical dewatering system and a higher content of solids will be obtained in the dewatered fluid.

If CO₂ is used, for the same level of solids in the fluid prior to dewatering, a reduction of flocculant consumption is also possible, namely a reduction of up to 50%. So the CO₂ can be viewed as a drainage additive in mechanical sludge dewatering.

The method comprises the following stages:
- CO₂ or mixtures of CO₂, in solid form, in liquid form, gaseous form or mix gas with liquid, are added to the fluid to be filtered from a CO₂ regulation station, which can have a CO₂ dosing station;
- The mixture is passed through a static or dynamic mixer in order to increase the transfer area between CO₂ and fluid and thus promote the reaction between the CO₂ and the fluid to be filtered;
- the pH of the mixture is measured after passing the mixer;
- the mixture obtained proceeds to filtration.

The CO₂ regulation station regulates the flow of CO₂ among the steps of mixture to have a certain quantity of CO₂. The usual dosage of CO₂ is comprised between 30 to 350 Kg CO₂ per ton of dry solids.

In the step of passage of the mixture in the static or dynamic mixer, the residence time is lower than 2 seconds.

After passing the static or dynamic mixer, the pH of the mixture is analysed. This is an important step since the measured value of pH give us an indication that the CO₂ has been properly dissolved.

### Brief Description of the Figures

The following figures provide preferred embodiments for illustrating the description and should not be seen as limiting the scope of invention.
**Figure 1****:** Typical curve for drainage increase with addition of CO₂.
**Figure 2****:** Typical process layout for drainage increase with addition of CO₂, where the reference numbers belong to:
   1 - water;
   2 - polymer preparation;
   3 - polymer;
   4 - sludge;
   5 - flow meter;
   6 - temperature;
   7 - pressure;
   8 - electrical cabinet;
   9 - pH;
   10 - mixer;
   11 - CO₂;
   12 - CO₂ dosing station;
   13 - CO₂ regulation station;
   14 - filtrate;
   15 - decanter;
   16 - sludge transporter;
   17 - sludge storage.

### Description of embodiments

The following text provides an explanation on the different embodiments of the technology disclosed in the present application. This explanation is not an extensive overview and does not intend to delineate the scope of the protection or any critical aspect or element of the same technology.

The present application discloses a method for increased filtration efficiency comprising the following steps:
- CO₂ or mixtures of CO₂ are added to the fluid to be filtered, from a CO₂ regulation station;
- the flow of CO₂ or mixtures of CO₂ is mixed with the fluid to be filtered in a mixer;
- the pH of the mixture is measured after passing the static or dynamic mixer;
- the mixture obtained proceeds to filtration.

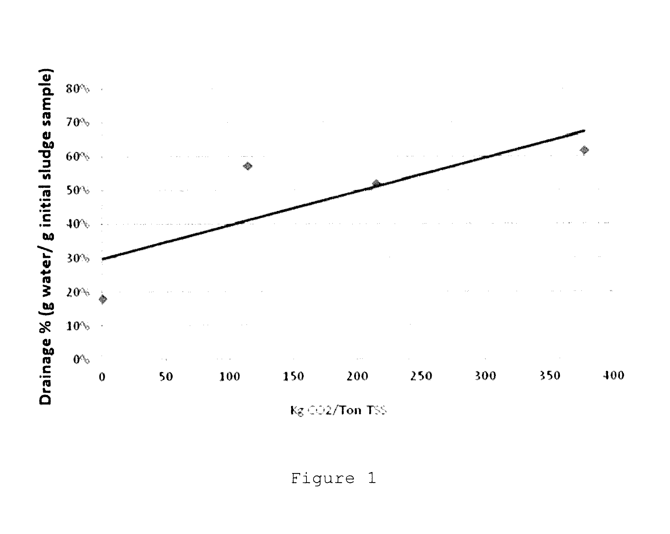

As can be seen in Figure 1, the experimental data tell us that the curve for drainage increase with addition of CO₂, so with more quantity of CO₂, either in gas or liquid or solid form, the drainage will also increase. With the method described in this application, especially with the use of a mixer, there is no need to include so much CO₂ to obtain a fluid that will drain more efficiently in the mechanical dewatering system and a higher content of solids will be obtained in the dewatered fluid.

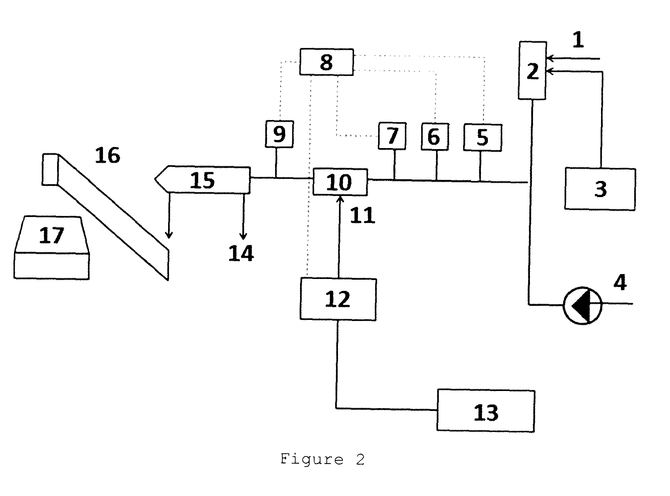

In Figure 2, we can see a typical process layout for drainage increase with addition of CO₂, wherein the sludge (4) is mixed with a polymer preparation (2), which work as a flocculant. Then the mixture is evaluated in what concerns to flow, temperature (6) and pressure (7). After this steps, the mixture is passed in the mixer (10) with a residence time lower than 2 seconds, which is enough to increase the transfer area between CO₂ and fluid in somewhat between 10.000 to 1.000.000 times and thus promote the reaction between the CO₂ and the fluid to be filtered. After these steps, the mixture is evaluated in his pH (9) value to define if the CO₂ has been properly dissolved. Afterwards, the mixture is introduced in the decanter (15) for filtering.

The technology is of course not in any way restricted to the embodiments described herein and a person of ordinary skill in the area can provide many possibilities to modifications thereof as defined in the claims.

The preferred embodiments described above are obviously combinable. The following dependent claims define further preferred embodiments of the disclosed technology.

## Claims

1. Method for increased filtration efficiency comprising the following steps:
- CO₂ or mixtures of CO₂ are added to the fluid to be filtered, from a CO₂ regulation station (13);
- the flow of CO₂ or mixtures of CO₂ is mixed with the fluid to be filtered in a mixer (10);
- the pH of the mixture is measured after passing the mixer (10);
- the mixture obtained proceeds to filtration.

2. Method for increased filtration efficiency according to claim 1, wherein the mixer (10) is static.

3. Method for increased filtration efficiency according to claim 1, wherein the mixer (10) is dynamic.

4. Method for increased filtration efficiency according to any of the previous claims, wherein the CO₂ or mixtures of CO₂ are in solid form, in liquid form, gaseous form or mix gas with liquid.

5. Method for increased filtration efficiency according to any of the previous claims comprising a CO₂ dosing station (13) between the CO₂ regulation station (13) and the mixer (10).

6. Use of the method for increased filtration efficiency described in any of the previous claims in water treatment plants and food industry.
